# FASCICULE DE BREVET EUROPEEN

(11) **EP 4 357 174 B1**
(45) Date de publication et mention de la délivrance du brevet: **15.04.2026**
(21) Numéro de dépôt: 23203256.5
(22) Date de dépôt: 12.10.2023
(51) Int. Cl.: B60J 7/22

(54) **MODULE DE TOIT COMPORTANT UN DÉFLECTEUR D AIR AMOVIBLE**
DACHMODUL MIT ABNEHMBAREM WINDABWEISER
ROOF MODULE WITH REMOVABLE AIR DEFLECTOR

(30) Priorité: 17.10.2022 FR 2210711
(43) Date de publication de la demande: 24.04.2024
(73) Titulaire: Renault s.a.s, 92100 Boulogne Billancourt (FR)
(72) Inventeur: CHAUFOUR, Olivier, 91940 LES ULIS (FR); HUBERT, Florent, 91940 LES ULIS (FR)

(56) Documents cités:
- EP-A2- 0 057 926
- EP-B2- 1 247 672
- DE-A1- 102013 014 240

## Description

L'invention est du domaine des véhicules, notamment des automobile. Elle concerne un module de toit destiné à être fixé à une structure d'une caisse d'un véhicule. Elle concerne un déflecteur d'air amovible et un ensemble comportant un module de toit et un déflecteur. L'invention concerne aussi un véhicule ayant un tel ensemble.

Il est connu des véhicules comportant une structure de caisse ayant une rigidité élevée du fait de l'assemblage de pièces réalisées en aluminium. Le recours à ce matériau confère légèreté, donc un ratio puissance/poids élevé, ce qui peut conférer une vocation sportive de telles véhicules.

La rigidité de caisse ouvre la possibilité de transformer la typologie du véhicule sans avoir à modifier les éléments structurants. Il devient alors possible de transformer un véhicule à structure renforcée en un véhicule à toit ouvrant, mais pour ne pas dégrader le ratio puissance/poids, il convient de trouver un toit ouvrant qui satisfait à l'exigence de légèreté propre à un tel véhicule.

Cependant, les solutions de toit ouvrants connues font appel aujourd'hui à des technologies complexes qui ont aussi comme inconvénients la multiplication des pièces nécessaires à leur fonctionnement, ce qui tend à alourdir considérablement le poids de la fonction « toit ouvrant ».

Afin de réduire les effets désagréables de bourdonnement ressenti à l'intérieur du véhicule, et les turbulences d'air à l'intérieur de l'habitacle, il est connu d'utiliser des déflecteurs d'air escamotables qui restent à demeurent sur le véhicule. Les documents EP 0 057 926 A2 et DE 10 2013 014240 A1 décrivent de tels déflecteurs.

Il a donc été fait le constat qu'une structure de caisse légère accueillant un toit ouvrant connu pénalise le ratio puissance/poids, car les éléments constitutifs du toit ne sont pas dissociables du véhicule. En outre, le recours à des dispositifs escamotables engendre des mécanismes complexes et coûteux.

Une telle situation devient inadmissible pour un véhicule dont la vocation sportive est primordiale, mais également pour les véhicules fabriqués en grande série, pour lesquels toute réduction de coûts est génératrice de satisfaction d'ordre économique pour le client final.

L'invention vise à apporter une solution à cet inconvénient en proposant un module de toit qui permette un transformation aisée du véhicule en ajoutant au besoin un déflecteur d'air de manière simple et rapide. L'invention a trait à module de toit de véhicule selon la revendication 1.

Le module objet de l'invention peut comprendre les caractéristiques suivantes, prises séparément ou en combinaison entre elles :
- la gouttière comprend au moins une paroi latérale dont une partie sommitale est confondue avec le support au niveau de l'ouverture du module, le module comportant un premier élément d'étanchéité disposé sur la paroi latérale et contre lequel au moins un panneau du module de toit est destiné à venir en appui afin de rendre étanche l'ouverture, le panneau étant notamment amovible ;
- la gouttière comprend au moins une paroi de fond, le module comportant un second élément d'étanchéité disposé sur la paroi de fond ;
- la paroi de fond prolonge une partie inférieure de la paroi latérale par l'intermédiaire d'une portion courbée de sorte que la paroi de fond s'étend sensiblement à l'horizontal ;
- l'interface de fixation est disposée entre lesdits premier et second éléments d'étanchéité ;
- la platine et le doigt forment un ensemble d'un seul tenant qui est collé sur le module de toit ;
- le doigt est de section cylindrique et comprend une gorge réalisée à proximité d'une extrémité libre du doigt ;
- le doigt comprend une tige filetée pour sa fixation au travers d'un trou taraudé de la platine ;

L'invention a aussi trait à un déflecteur d'air comprenant une lame rigide de profil sensiblement plan, le déflecteur d'air comprend un moyen de verrouillage destiné à l'assemblage du déflecteur sur le module susmentionné de sorte que ledit moyen de verrouillage est apte à venir en prise avec l'interface de fixation, ledit moyen de verrouillage comprend au moins une targette rapportée sur une face intérieure du déflecteur, notamment deux targettes, la targette comprend un élément mobile étant apte à coulisser, notamment le long d'un axe transversal, entre des positions rétractée et déployée sur un élément fixe, de telle sorte qu'en position déployée la targette est apte à lier axialement le déflecteur au module, notamment à l'interface du module.

Le déflecteur d'air objet de l'invention peut comprendre les caractéristiques suivantes, prises séparément ou en combinaison entre elles :
- une extrémité de l'élément mobile comprend un moyen de préhension, notamment une portion courbée sensiblement à angle droit ;
- une extrémité opposée de l'élément mobile comprend un crochet élastiquement déformable, notamment radialement déformable ;
- l'élément fixe comprend une ouverture destinée à être traversée par le doigt du module ;
- la lame rigide comprend une ouverture coaxiale à celle de l'élément fixe ;
- il comprend un moyen anti-abrasion, notamment au moins une bande anti-abrasive destinée à venir en appui contre le support du moule lorsque le déflecteur est assemblé au support, notamment contre la gouttière ;
- il comprend un bord inférieur comprenant ledit moyen anti-abrasion, notamment au moins quatre bandes anti-abrasives réparties uniformément le long de la lame rigide ;
- la face extérieure comprend ledit moyen anti-abrasion, notamment au moins quatre bandes anti-abrasives réparties uniformément le long d'une portion inférieure ;
- il comprend une jonction liant une portion supérieure à une portion inférieure ;
- il comprend au moins un réseau de parois de rigidification s'étendant en tout ou partie au niveau de la jonction, de la portion supérieure et/ou de la portion inférieure, ledit réseau de parois de rigidification s'étendant en saillie hors de la face intérieure, notamment transversalement le long de tout ou partie du déflecteur ;
- la partie supérieure est inclinée par rapport à la portion inférieure, notamment d'un angle α compris entre 10° et 30°.

L'invention concerne un ensemble comportant le module de toit ayant toutes ou partie des caractéristiques susmentionnées et le déflecteur d'air ayant toutes ou partie des caractéristiques susmentionnées. Cet ensemble se caractérise en ce que la targette en l'état déployé exerce un contre effort déformant le premier élément d'étanchéité disposé entre le déflecteur et le support.

L'ensemble de l'invention se caractérise en ce que le premier élément d'étanchéité est disposé en compression entre la gouttière et la jonction du déflecteur, la jonction présente un profil concave sensiblement en arc de cercle.

L'ensemble de l'invention se caractérise en ce que le moyen anti-abrasion est interposé en compression entre la gouttière et le déflecteur. L'invention concerne aussi un véhicule, notamment du type d'une berline à deux places, qui comprend un module ayant toutes ou partie des caractéristiques susmentionnées, ou un ensemble ayant toutes ou partie des caractéristiques susmentionnées.

Les dessins annexés représentent, à titre d'exemple, un mode de réalisation d'un module de toit, d'un déflecteur d'air, d'un ensemble constitué d'un module et d'un déflecteur d'air selon l'invention.
La [Fig.1] représente selon une vue en perspective, un module de toit prise isolément ayant un déflecteur d'air, selon l'invention ;
La [Fig.2] représente un agrandissement du déflecteur d'air assemblé au module de toit de la [Fig.1] ;
La [Fig.3] représente de manière schématique l'ensemble de la [Fig.1] selon la ligne de coupe III-III ;
La [Fig.4] représente selon une vue de face, de manière schématique, le déflecteur d'air de la [Fig.1] pris isolément, selon l'invention.

On se référera à un repère orthonormé direct XYZ, dans lequel l'axe X désigne la direction longitudinale arrière-avant du véhicule, orienté vers l'arrière, l'axe Y désigne la direction transversale du véhicule et est orienté de la gauche vers la droite du véhicule, la gauche et la droite étant définies selon le point de vue d'un conducteur du véhicule, l'axe Z désigne la direction verticale, et est orienté du bas vers le haut, le véhicule reposant sur un sol horizontal.

Les termes « supérieur » et « inférieur » sont définis en référence à l'axe Z. Les termes « avant » et « arrière » sont définis en référence à l'axe X.

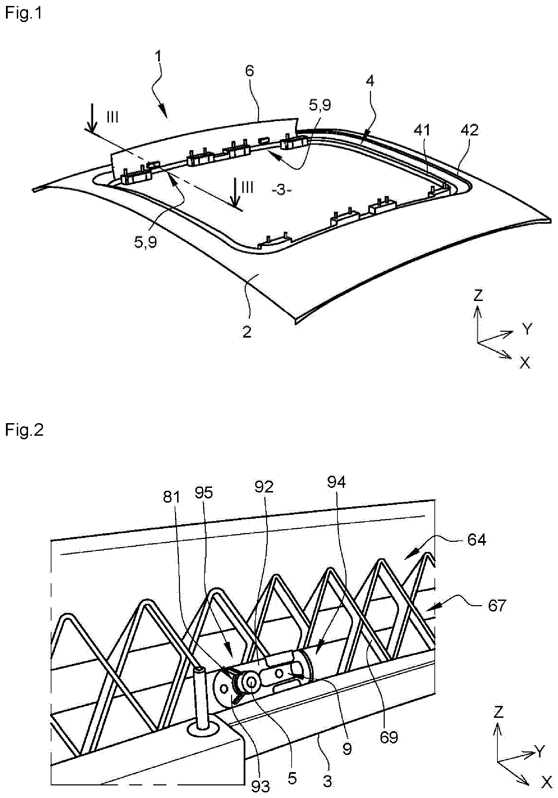

La figure 1 représente un module de toit 1 de véhicule, comprenant un support 2, une ouverture 3, une gouttière 4. L'ouverture 3 est réalisée dans le support 2 et délimitée par la gouttière 4 périphérique. Le support 2 intégrant la gouttière 4 est réalisé en matière composite, notamment avec de la fibre de carbone et un liant, tel que de la résine époxy.

Le module 1 comprend deux interfaces 5 de fixation sur lesquelles un déflecteur 6 d'air est fixé.

Par soucis de clarté, seul une interface 5 de fixation va être par la suite décrite, sachant que l'autre interface est identique.

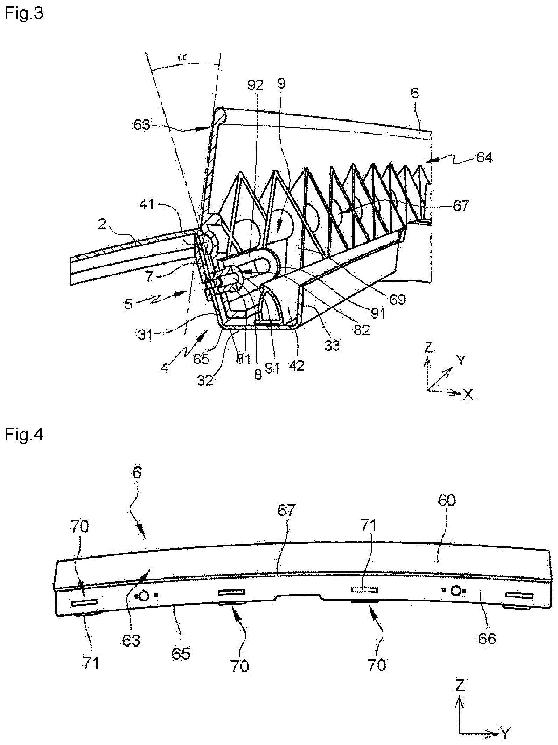

La figure 3 détaille l'interface 5 de fixation qui comprend une platine 7, un doigt 8 saillant de la platine 7, ici de manière sensiblement perpendiculaire l'un par rapport à l'autre. Le doigt 8 traverse une ouverture du support 2.

La gouttière 4 comprend au moins une paroi latérale 31 dont une partie sommitale est confondue avec le support 2 au niveau de l'ouverture 3 du module 1.

La figure 3 détaille un premier élément d'étanchéité 41 disposé sur la paroi latérale 31 et contre lequel au moins un panneau amovible du module de toit est destiné à venir en appui, afin de rendre étanche l'ouverture 3. Le module de toit comprend deux panneaux amovibles pour fermer l'ouverture 3 en venant en prise contre la gouttière 4, notamment contre les éléments d'étanchéité 41, 42 disposés dans la gouttière.

La gouttière 4 comprend une paroi de fond 32, le module comportant un second élément d'étanchéité 42 disposé sur la paroi de fond 32 qui prolonge une partie inférieure de la paroi latérale 31 par l'intermédiaire d'une portion courbée de sorte que la paroi de fond 32 s'étend sensiblement à l'horizontal.

Sur la figure 3, l'interface 5 de fixation est disposée entre lesdits premier et second éléments d'étanchéité 41, 42. Le doigt 8 de l'interface 5 est de section cylindrique et comprend une gorge 81 réalisée à proximité d'une extrémité libre 82 du doigt 8. Le doigt 8 peut comprendre une tige filetée pour sa fixation au travers d'un trou taraudé de la platine 7.

Ainsi, la platine 7 est fixée au support 2 par l'intermédiaire du doigt 8 de telle manière que la platine 7 est disposée derrière la paroi latérale 31, elle est invisible depuis l'extérieur. L'interface 5 est en deux parties de telle sorte que l'assemblage s'effectue par le placement du doigt du côté extérieur de la paroi latérale 31, et de la platine 7 placée de l'autre côté de la paroi latérale. Le doigt 8 comprend un épaulement contre lequel la paroi latéral 31 est en appui lorsque la platine 7 est fixée sur le doigt 8. Selon une variante de réalisation, la platine 7 et le doigt 8 forment un ensemble d'un seul tenant. Le doigt peut être soudé à la platine ou bien être venu de matière, notamment par moulage. L'ensemble est alors fixé par collage au module de toit 1. L'interface 5 est visible à l'intérieur de la gouttière 4 par l'intermédiaire du seul doigt 8.

Les interfaces 5 de fixation sont destinées à l'assemblage d'un déflecteur d'air 6 qui est assemblé de manière réversible, en ce sens qu'il est démontable sans outil. Le déflecteur d'air 6 est donc une pièce amovible qui peut être retirée du module de toit pour être rangée par exemple à l'intérieur du véhicule, dans un coffre et/ou dans l'habitacle, et/ou dans un étui de rangement dédié.

Le déflecteur 6 d'air comprenant une lame rigide 60 qui a un profil sensiblement plan notamment dans sa partie dédiée à la déflection d'air. Il comprend un moyen de verrouillage 9 visible à la figure 2. Ledit moyen de verrouillage 9 est apte à venir en prise avec l'interface 5 de fixation précédemment décrite. A chaque interface 5 de fixation est associé un moyen de verrouillage 9 qui comprend au moins une targette 91 rapportée sur une face intérieure 64 du déflecteur 6.

Chaque targette 91 comprend un élément mobile 92 étant apte à coulisser, notamment le long d'un axe transversal Y, entre des positions rétractée et déployée sur un élément fixe 93, de telle sorte qu'en position déployée la targette 91 est apte à lier axialement le déflecteur 6 au module 1, notamment à l'interface 5.

Pour ce faire, une extrémité de l'élément mobile 92 comprend un moyen de préhension 94, notamment une portion courbée sensiblement à angle droit. L'extrémité opposée de l'élément mobile 92 comprend un crochet 95 élastiquement déformable, notamment radialement déformable. L'élément fixe 93 est rapporté et collé sur la face intérieure 64 et comprend une ouverture destinée à être traversée par le doigt 8 du module 1. L'élément fixe 93 peut être rapporté et vissé. Pour être traversé par le doigt 8 de l'interface 5, la lame rigide 60 comprend une ouverture coaxiale à celle de l'élément fixe 93.

Sur la figure 4, la déflecteur d'air 6 est représenté avec un moyen anti-abrasion 70, qui peut être du type d'une ou plusieurs bandes anti-abrasive 71 destinées à venir en appui contre le support du module 1 lorsque le déflecteur est assemblé au support, notamment contre la gouttière 4. Plus particulièrement, le déflecteur d'air 6 comprend un bord inférieur 65 comprenant ledit moyen anti-abrasion 70, notamment au moins quatre bandes anti-abrasives 71 réparties uniformément le long de la lame rigide.

La face extérieure 63 peut également comprendre ledit moyen anti-abrasion 70, notamment au moins quatre bandes anti-abrasives 71 réparties uniformément le long d'une portion inférieure 66. De telle bande anti-abrasives ont pour fonction de ne pas rayer la peinture du support 2 du module de toit lorsque le déflecteur est positionné.

Sur la figure 4, le déflecteur d'air 6 comprend une jonction 67 liant une portion supérieure 68 à une portion inférieure 66. La jonction 67 est visible sur la figure 3, car elle est destinée à venir en appui contre le premier élément d'étanchéité 41 du module de toit. La jonction 67 a une section transversale sensiblement en arc de cercle.

La portion supérieure 68 a approximativement une hauteur comprise entre 1 et 3 fois la hauteur de la portion inférieure 66. Préférentiellement, la portion supérieure 68 a approximativement une hauteur deux fois la hauteur de la portion inférieure 66. A titre d'exemple, non limitatif, la hauteur de la portion supérieure 68 est comprise entre 30 mm et 80 mm, de préférence supérieure à 50 mm.

La partie sommitale de la portion supérieure 68 est un bord supérieur qui se présente sous la forme d'une goutte d'eau vue en section, dont l'effet est de limiter le sifflement d'air par traitement de la fuite aéraulique.

Afin de rendre rigide le déflecteur d'air 6, il comprend au moins un réseau de parois de rigidification 69 faisant saillie hors de la face intérieure 64. Le réseau de parois de rigidification 69 s'étend en tout ou partie au niveau de la jonction 67, de la portion supérieure 68 et/ou de la portion inférieure 66. Ledit réseau de parois de rigidification 69 s'étend notamment transversalement le long de tout ou partie du déflecteur 6. Compte tenu de la conformation de la gouttière 4, et de l'effet aéraulique recherché, le déflecteur d'air 6 a sa partie supérieure 68 inclinée par rapport à la portion inférieure 66, notamment d'un angle α compris entre 10° et 30°, comme cela est visible sur la figure 3.

Lorsque le déflecteur d'air 6 est assemblé sur le module de toit 1, il est réalisé un ensemble selon lequel la targette 91 en l'état déployé exerce un contre effort déformant le premier élément d'étanchéité 41 disposé entre le déflecteur 6 et le support 2. Ainsi, le premier élément d'étanchéité 41 est disposé en compression entre la gouttière 4 et la jonction 67 du déflecteur 6 qui présente un profil concave sensiblement en arc de cercle afin d'épouser le premier élément d'étanchéité 41, qui peut être de section tubulaire.

Lorsque le déflecteur d'air 6 est assemblé sur le module de toit 1, le moyen anti-abrasion 70, 71 est interposé en compression entre la gouttière 4 et le déflecteur 6.

De fait de ces mises en compression du premier élément d'étanchéité 41, mais aussi du moyen anti-abrasion 70 par le verrouillage du déflecteur 6 sur le support 2, il est réalisé un ensemble rigide qui limite toutes vibrations issues de l'écoulement de l'air lorsque le véhicule est en déplacement, quelle qu'en soit la vitesse de déplacement.

Le déflecteur 6 n'est pas nécessairement positionné sur le module de toit 1 ouvert, soit dépourvu de panneaux amovibles. L'utilisateur peut facilement monter le déflecteur 6 en le positionnant sur les interfaces de fixation 5, puis en le verrouillant par le biais des deux targettes. Le démontage est tout aussi simple et rapide à exécuter.

Le déflecteur 6 est réalisé en matière composite, il est donc léger et rigide.

## Revendications

1. Module de toit (1) de véhicule, comprenant un support (2), une ouverture (3), une gouttière (4), l'ouverture (3) étant réalisée dans le support (2) et délimitée par une gouttière (4) périphérique, le module de toit (1) comprend au moins une interface (5) de fixation sur laquelle un déflecteur (6) d'air est apte à être fixé, **caractérisé en ce que** l'interface (5) de fixation comprend une platine (7), un doigt (8) saillant de la platine (7), notamment de manière sensiblement perpendiculaire l'un par rapport à l'autre, le doigt (8) traversant une ouverture du support (2), la gouttière (4) comprenant au moins une paroi latérale (31), la platine (7) étant fixée au support (2) par l'intermédiaire du doigt (8) de telle manière que la platine (7) est disposée derrière la paroi latérale (31), la platine étant invisible depuis l'extérieur.

2. Module (1) selon la revendication précédente, **caractérisé en ce qu'**au moins une paroi latérale (31) comprend une partie sommitale confondue avec le support (2) au niveau de l'ouverture (3) du module (1), le module comportant un premier élément d'étanchéité (41) disposé sur la paroi latérale (31) et contre lequel au moins un panneau du module de toit est destiné à venir en appui afin de rendre étanche l'ouverture (3), le panneau étant notamment amovible.

3. Module (1) selon la revendication 1 ou 2, **caractérisé en ce que** la gouttière (4) comprend au moins une paroi de fond (32), le module comportant un second élément d'étanchéité (42) disposé sur la paroi de fond (32).

4. Module (1) selon la revendication précédente, caractérisé ce que l'interface (5) de fixation est disposée entre lesdits premier et second éléments d'étanchéité (41, 42).

5. Déflecteur (6) d'air comprenant une lame rigide (60) de profil sensiblement plan, un moyen de verrouillage (9) destiné à l'assemblage du déflecteur sur le module (1) des revendications 1 à 4 de sorte que ledit moyen de verrouillage (9) est apte à venir en prise avec l'interface (5) de fixation, **caractérisé en ce que** ledit moyen de verrouillage (9) comprend au moins une targette (91) rapportée sur une face intérieure (64) du déflecteur (6), notamment deux targettes (91), la targette (91) comprenant un élément mobile (92) étant apte à coulisser, notamment le long d'un axe transversal (Y), entre des positions rétractée et déployée sur un élément fixe (93), de telle sorte qu'en position déployée la targette (91) est apte à lier axialement le déflecteur (6) au module (1), notamment à l'interface (5) du module (1).

6. Déflecteur (6) selon la revendication précédente, **caractérisé en ce qu'**une extrémité de l'élément mobile (92) comprend un moyen de préhension (94), notamment une portion courbée sensiblement à angle droit, et **en ce qu'**une extrémité opposée de l'élément mobile (92) comprend un crochet (95) élastiquement déformable, notamment radialement déformable.

7. Ensemble comportant un module (1) selon l'une quelconque des revendications 1 à 4 prise en combinaison avec la revendication 2 et un déflecteur (6) d'air selon la revendication 5 ou 6, **caractérisé en ce que** la targette (91) en l'état déployé exerce un contre effort déformant le premier élément d'étanchéité (41) disposé entre le déflecteur (6) et le support (2).

8. Véhicule, notamment du type d'une berline à deux places, **caractérisé en ce qu'**il comprend un module de toit (1) selon l'une quelconque des revendications 1 à 4, ou un ensemble selon la revendication 7.

## Patentansprüche

1. Dachmodul (1) eines Fahrzeugs, welches einen Träger (2), eine Öffnung (3) und eine Rinne (4) umfasst, wobei die Öffnung (3) in dem Träger (2) ausgebildet ist und von einer umlaufenden Rinne (4) begrenzt wird, wobei das Dachmodul (1) mindestens eine Befestigungsschnittstelle (5) umfasst, an der ein Windabweiser (6) befestigbar ist, **dadurch gekennzeichnet, dass** die Befestigungsschnittstelle (5) eine Platte (7) und einen von der Platte (7) vorstehenden Finger (8) umfasst, die insbesondere im Wesentlichen senkrecht zueinander sind, wobei der Finger (8) eine Öffnung des Trägers (2) durchquert, die Rinne (4) mindestens eine Seitenwand (31) umfasst und die Platte (7) an dem Träger (2) durch den Finger (8) derart befestigt ist, dass die Platte (7) hinter der Seitenwand (31) angeordnet ist, wobei die Platte von außen unsichtbar ist.

2. Modul (1) nach dem vorhergehenden Anspruch, **dadurch gekennzeichnet, dass** mindestens eine Seitenwand (31) einen Oberteil umfasst, der an der Öffnung (3) des Moduls (1) in den Träger (2) übergeht, wobei das Modul ein erstes Dichtelement (41) aufweist, das an der Seitenwand (31) angeordnet ist und an dem mindestens ein Paneel des Dachmoduls zur Anlage zu kommen bestimmt ist, um die Öffnung (3) abzudichten, wobei das Paneel insbesondere abnehmbar ist.

3. Modul (1) nach Anspruch 1 oder 2, **dadurch gekennzeichnet, dass** die Rinne (4) mindestens eine Bodenwand (32) umfasst, wobei das Modul ein zweites Dichtelement (42) aufweist, das an der Bodenwand (32) angeordnet ist.

4. Modul (1) nach dem vorhergehenden Anspruch, **dadurch gekennzeichnet, dass** die Befestigungsschnittstelle (5) zwischen dem ersten und dem zweiten Dichtelement (41, 42) angeordnet ist.

5. Windabweiser (6), welcher eine starre Lamelle (60) mit im Wesentlichen ebenem Profil und ein Verriegelungsmittel (9), das zur Montage des Windabweisers am Modul (1) nach den Ansprüchen 1 bis 4 bestimmt ist, so dass das Verriegelungsmittel (9) mit der Befestigungsschnittstelle (5) in Eingriff kommen kann, umfasst, **dadurch gekennzeichnet, dass** das Verriegelungsmittel (9) mindestens einen an eine Innenseite (64) des Windabweisers (6) angesetzten Riegel (91), insbesondere zwei Riegel (91), umfasst, wobei der Riegel (91) ein bewegliches Element (92) umfasst, das auf einem ortsfesten Element (93) zwischen einer zurückgezogenen und einer ausgefahrenen Position gleiten kann, insbesondere entlang einer Querachse (Y), derart, dass in der ausgefahrenen Position der Riegel (91) den Windabweiser (6) mit dem Modul (1), insbesondere mit der Schnittstelle (5) des Moduls (1), axial verbinden kann.

6. Windabweiser (6) nach dem vorhergehenden Anspruch, **dadurch gekennzeichnet, dass** ein Ende des beweglichen Elements (92) ein Greifmittel (94) umfasst, insbesondere einen im Wesentlichen im rechten Winkel umgebogenen Abschnitt, und dadurch, dass ein gegenüberliegendes Ende des beweglichen Elements (92) einen elastisch verformbaren, insbesondere radial verformbaren Haken (95) umfasst.

7. Anordnung, welche ein Modul (1) nach einem der Ansprüche 1 bis 4 in Verbindung mit Anspruch 2 und einen Windabweiser (6) nach Anspruch 5 oder 6 aufweist, **dadurch gekennzeichnet, dass** der Riegel (91) im ausgefahrenen Zustand eine Gegenkraft ausübt, die das erste Dichtelement (41), das zwischen dem Windabweiser (6) und dem Träger (2) angeordnet ist, verformt.

8. Fahrzeug, insbesondere vom Typ einer zweisitzigen Limousine, **dadurch gekennzeichnet, dass** es ein Dachmodul (1) nach einem der Ansprüche 1 bis 4 oder eine Anordnung nach Anspruch 7 umfasst.

## Claims

1. Vehicle roof module (1), comprising a support (2), an opening (3), a gutter (4), the opening (3) being realized in the support (2) and delimited by a peripheral gutter (4), the roof module (1) comprises at least one fastening interface (5) to which an air deflector (6) is able to be fastened, **characterized in that** the fastening interface (5) comprises a plate (7), a finger (8) projecting from the plate (7), in particular substantially perpendicular to one another, the finger (8) passing through an opening of the support (2), the gutter (4) comprising at least one lateral wall (31), the plate (7) being fastened to the support (2) via the finger (8) in such a way that the plate (7) is disposed behind the lateral wall (31), the plate being invisible from the outside.

2. Module (1) according to the preceding claim, **characterized in that** at least one lateral wall (31) comprises a top part that is coincident with the support (2) at the opening (3) of the module (1), the module having a first sealing element (41) disposed on the lateral wall (31) and against which at least one panel of the roof module is intended to bear in order to seal the opening (3), the panel being in particular removable.

3. Module (1) according to Claim 1 or 2, **characterized in that** the gutter (4) comprises at least one bottom wall (32), the module having a second sealing element (42) disposed on the bottom wall (32).

4. Module (1) according to the preceding claim, **characterized in that** the fastening interface (5) is disposed between said first and second sealing elements (41, 42).

5. Air deflector (6) comprising a rigid blade (60) of substantially planar profile, a locking means (9) intended for assembling the deflector on the module (1) of Claims 1 to 4 such that said locking means (9) is able to engage with the fastening interface (5), **characterized in that** said locking means (9) comprises at least one bolt (91) attached to an inner face (64) of the deflector (6), in particular two bolts (91), the bolt (91) comprising a mobile element (92) that is able to slide, in particular along a transverse axis (Y), between retracted and deployed positions on a fixed element (93), such that in the deployed position the bolt (91) is able to axially connect the deflector (6) to the module (1), in particular to the interface (5) of the module (1).

6. Deflector (6) according to the preceding claim, **characterized in that** one end of the mobile element (92) comprises a gripping means (94), in particular a portion that is curved substantially at right angles, and **in that** an opposite end of the mobile element (92) comprises a hook (95) that is elastically deformable, in particular radially deformable.

7. Assembly having a module (1) according to any one of Claims 1 to 4 taken in combination with Claim 2 and an air deflector (6) according to Claim 5 or 6, **characterized in that** the bolt (91) in the deployed state exerts a counterforce deforming the first sealing element (41) disposed between the deflector (6) and the support (2).

8. Vehicle, in particular of the type of a two-seater saloon, **characterized in that** it comprises a roof module (1) according to any one of Claims 1 to 4, or an assembly according to Claim 7.
